# EUROPÄISCHE PATENTSCHRIFT

(11) **EP 2 476 107 B1**
(45) Veröffentlichungstag und Bekanntmachung des Hinweises auf die Patenterteilung: **11.01.2017**
(21) Anmeldenummer: 10778544.6
(22) Anmeldetag: 09.09.2010
(51) Int. Cl.: G07F 19/00

(54) **VERFAHREN UND ANORDNUNG ZUR ÜBERTRAGUNG VON DATEN FÜR DIE WARTUNG EINES SELBSTBEDIENUNGSTERMINALS**
METHOD AND ARRANGEMENT FOR TRANSFERRING DATA FOR THE MAINTENANCE OF A SELF-SERVICE TERMINAL
PROCÉDÉ ET SYSTÈME SERVANT À TRANSMETTRE DES DONNÉES POUR LA MAINTENANCE D'UN TERMINAL EN LIBRE SERVICE

(30) Priorität: 11.09.2009 DE 102009040928
(43) Veröffentlichungstag der Anmeldung: 18.07.2012
(73) Patentinhaber: Wincor Nixdorf International GmbH, 33106 Paderborn (DE)
(72) Erfinder: BLUME, Marco, 33102 Paderborn (DE)
(74) Vertreter: 2K Patentanwälte Blasberg Kewitz & Reichel
(86) Internationale Anmeldenummer: PCT/EP2010/005537
(87) Internationale Veröffentlichungsnummer: WO 2011/029595

(56) Entgegenhaltungen:
- EP-A1- 1 542 158
- EP-A2- 1 093 093
- EP-A2- 1 160 744
- US-A1- 2006 036 706
- US-B1- 6 430 268

## Beschreibung

Die Erfindung betrifft ein Verfahren zur Übertragung von Daten für die Wartung eines Selbstbedienungsterminals nach dem Oberbegriff des Anspruchs 1 sowie eine das Verfahren durchführende Anordnung nach dem Oberbegriff des nebengeordneten Anspruchs. Weiterhin betrifft die Erfindung ein für die Durchführung des Verfahrens eingerichtetes Selbstbedienungsterminal.

Es ist bekannt, dass Selbstbedienungsterminals (kurz auch SB-Terminals genannt), wie zum Beispiel Geldautomaten, Informationsterminals und dergleichen, mittels Fernwartungseinrichtungen technisch überwacht und gewartet werden. Da die SB-Terminals üblicherweise an verschiedenen Standorten aufgestellt bzw. installiert sind, wie zum Beispiel in Banken, Einkaufszentren usw., sind die über Telekommunikationsverbindungen mit entfernten Datenzentralen verbunden, welche den Zustand der SB-Terminals überwachen. Daneben ist es bekannt, dass SB-Terminals auch durch Wartungspersonal vor Ort gewartet und instand gehalten werden. In besonders sensitiven Anwendungsbereichen, wie sie beispielsweise bei Geldautomaten gegeben sind, kann es gewünscht sein, dass das jeweilige SB-Terminal nicht direkt über eine Telekommunikationsverbindung angeschlossen wird. Insbesondere in diesen Fällen ist es üblich, dass das Wartungspersonal vor Ort am jeweiligen SB-Terminal selbst Service- und Diagnosedaten abfrägt und diese auf einem Datenträger, wie zum Beispiel einer Diskette oder einem Speicherchip bzw. USB-Stick speichert und dann den Datenträger persönlich am Standort der Datenzentrale abliefert. Auch ist es durchaus üblich, dass das jeweilige Wartungspersonal die Diagnosedaten fernmündlich über einen herkömmlichen Telefonapparat oder ein Mobiltelefon an die zentrale Datenstelle weiter gibt.

Aus der EP 1 093 093 A2 ist ein SB-Terminal in Gestalt eines Verkaufsautomaten bekannt, bei dem Daten, die den technischen oder sonstigen Zustand des Verkaufsautomaten, wie z.B. Kühltemperatur, Bestückung o.Ä., zwischen dem Verkaufsautomaten und einer entfernten Datenzentrale über eine Telekommunikationsverbindung übertragen werden. Dazu werden die Daten im Nahbereich des Verkaufsautomaten über Ausgabe- und Aufnahmevorrichtungen in einer stromlosen und funkfreien Datenübertragungsform übertragen werden. Diese Ausgabe- und Aufnahmevorrichtungen sind optische Infrarot-Sender und Infrarot-Empfängers.

Die DE 60 2004 012 052 T2 bzw. die korrespondierende EP 1 542 158 A1 beschreibt ein System bestehend aus einem Produktaufkleber mit einem Datenspeicher und einer akustischer Koppelung bzw. einem akustischen Signalgeber, um Produktdaten über ein Telefon an ein Produktunterstützungssystem zu übertragen. In dem Produktaufkleber kann z.B. die Seriennummer einer Selbstbedienungsvorrichtung bzw. eines Bankautomat eingespeichert sein, die an das z.B. in einem Call-Center sich befindliche Produktunterstützungssystem übertragen wird.

Die US 6 340 268 B1 beschreibt einen Verkaufsautomaten, der zum Übertragen von technischen Zustandsdaten eine Ausgabevorrichtung in Gestalt eines Senders aufweist, welcher Datensignale, vorzugsweise als Funksignale, an einem Empfänger sendet, der wiederum über eine Telefonverbindung mit einer Zentrale kommunizieren kann, um die Daten an die Zentrale weiterzuleiten.

Die US 2006 / 0 036 706 A1 beschreibt die Übertragung von Daten in einem Informations-Verteilungs-System, das einen Informations-Management-Server und eine Vielzahl damit verbundener Datenerfassungs-Geräte aufweist. Als Datenerfassungs-Gerät kann auch ein Mobiltelefon dienen, das mit einer Kamera ausgestattet, um z.B. Barcodes aufzunehmen. Die US 669 7466 B2 beschreibt eine Vorrichtung in Gestalt eines eingebetteten Systems (embedded system), bei dem Statusdaten mittels eines Audio-Generators in Tonsignale, wie z.B. DTMF-Signale, gewandelt werden und über einen Lautsprecher ausgegeben werden können, um über eine Telefonnetz oder dergleichen übertagen zu werden.

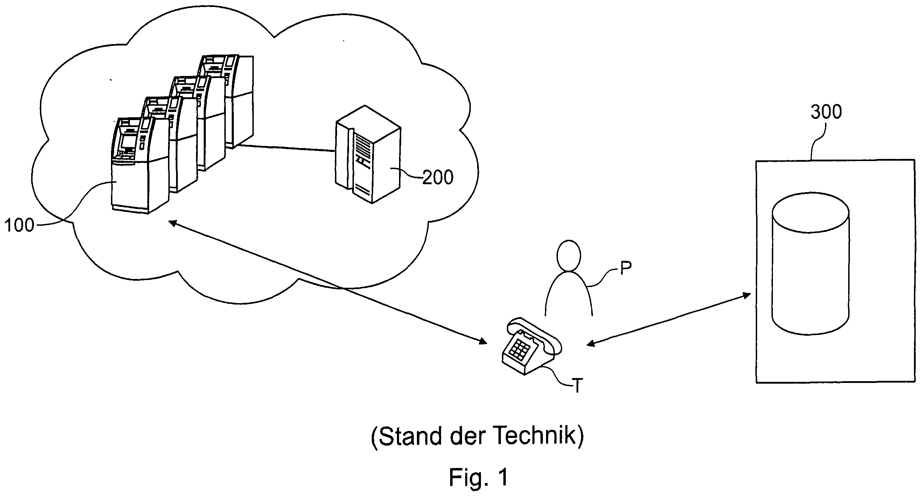

In der Figur 1 ist die Ausgangssituation für die vorliegende Erfindung dargestellt. Die schematische Darstellung gibt die typische Struktur eines Systems mit mehreren zu wartenden SB-Terminals wieder. Die SB-Terminals, die hier beispielsweise als Geldautomaten 100 ausgebildet sind, sind über gesicherte Datenverbindungen mit einem Host 200 verbunden. Diese Datenverbindungen dienen jedoch ausschließlich der Übertragung von Daten, die beim Betrieb der Geldautomaten anfallen und nicht der Übertragung von Daten zur Wartung der Geldautomaten. Die Wartung wird herkömmlicherweise durch entsprechendes Wartungspersonal P durchgeführt, welches jeweils vor Ort an dem jeweiligen SB-Terminal technische Diagnosen bzw. Untersuchungen vornimmt und insbesondere Wartungs- bzw. Servicedaten abfrägt. Dies können beispielsweise Störungsmeldungen und damit verbundene Zustandsdaten sein, die dann der jeweilige Servicetechniker P an die Datenzentrale bzw. den dortigen Help Desk weitergibt. Dazu bedient sich der Servicetechniker üblicherweise eines Telefons T. Die Störungsbehebung erfolgt dann mittels telefonischer Unterstützung durch den Help Desk, wobei der dortige Call Agent dem Wartungstechniker vor Ort fernmündliche Anweisungen geben muss bzw. von diesem Informationen bezüglich der Diagnosedaten usw. fernmündlich abfragen muss. Wünschenswert wäre eine direkte Datenanbindung von den SB-Terminals 100 an die Datenzentrale 300. Jedoch ist dies insbesondere in sensitiven Anwendungsfällen gerade nicht erwünscht. Insbesondere möchten viele Betreiber von SB-Terminals vermeiden, dass es zu einem direkten Anschluß des SB-Terminals an eine Telekommunikationsverbindung oder auch an ein elektronisches Gerät, welches beispielsweise der Servicetechniker benutzt, kommen kann. Denn aus sicherheitstechnischen Gründen soll vermieden werden, dass es zu einem direkten Anschluß an externe Geräte und/oder Netze kommt, weil dies u.a. auch Möglichkeiten für Datenangriffe und/oder Einschleusung von Viren und dergleichen eröffnen würde.

Demnach ist es Aufgabe der vorliegenden Erfindung, ein Verfahren und eine Anordnung zur Übertragung von Daten für die Wartung eines Selbstbedienungsterminals vorzuschlagen, bei dem die oben genannten Nachteile vorteilhaft überwunden werden. Insbesondere soll ein direkter Anschluß des jeweiligen SB-Terminals an externe Geräte und/oder Netze vermieden werden, und es dennoch möglich sein, Wartungs- und Diagnosedaten direkt zwischen dem SB-Terminal und der Datenzentrale zu übertragen.

Gelöst wird die Aufgabe durch ein Verfahren mit den Merkmalen des Anspruchs 1. Demnach wird vorgeschlagen, dass Daten, welche den technischen Zustand des Selbstbedienungsterminals betreffen, im Nahbereich des Selbstbedienungsterminals über Ausgabe- und Aufnahmevorrichtungen in einer stromlosen und funkfreien Übertragungsform übertragen werden, wobei es sich um optische auf Barcodes basierende Datenübertragungsformen handelt. In einem ersten Schritt werden die Daten an dem Selbstbedienungsterminal angefordert werden; in einem nächsten Schritt werden die Daten aus elektrischen Datensignalen gewandelt und von einer Ausgabevorrichtung in einer optischen Darstellungsform ausgegeben; in einem nächsten Schritt werden die Daten von einer Aufnahmevorrichtung in der optischen Darstellungsform aufgenommen und in elektrische Datensignale gewandelt werden; und in einem nächsten Schritt als elektrische Datensignale über die Telekommunikationsverbindung an die entfernte Datenzentrale übertragen. Die Ausgabe- und Aufnahmevorrichtungen sind mit entsprechenden elektro-optischen Wandlern versehen. Demgemäß ist eine direkte Datenübertragung zwischen dem SB-Terminal und der Datenzentrale möglich, wobei zumindest auf einem Teilabschnitt des Datenübertragungsweges, nämlich im Nahbereich des SB-Terminals, die Daten stromlos und funkfrei übertragen werden. Damit wird eine direkte Datenverbindung ermöglicht und dennoch sichergestellt, dass es nicht zu einer direkten elektrischen Verbindung bzw. einem direkten elektrischen Anschluß kommt. Auch wird keine störanfällige und/oder abhöranfällige Funkverbindung benötigt.

Die Begriffe "stromlos" und "funkfrei" sind aus sich heraus verständlich. Zum Verständnis der ungewöhnlichen Kombination beider Begriffe sei hier folgendes angemerkt: Unter "stromlos" wird hier dem allgemeinen Verständnis folgend verstanden, dass die zu übertragenden Daten nicht durch stromführende Leitungen bzw. elektrische Leiter, Kabel und dergleichen übertragen werden. Das bedeutet, dass über die eigentliche Übertragungsstrecke kein elektrischer Strom (z.B. in Form elektrischer Datenimpulse) fließt. Somit ist der Begriff "stromlos" nicht identisch mit "kabellos" oder "drahtlos" zu verstehen, weil z.B. auch optische Daten- bzw. Signalübertragungen möglich sind, die durchaus über "stromlose Kabel", nämlich Lichtwellenleiter, geführt werden. Es versteht sich, dass der Begriff "stromlos" auch kabellose Übertragungen in Form von optischen und/oder akustischen Signalen mit umfasst. Unter "funkfrei" wird hier dem allgemeinen Verständnis folgend verstanden, dass die Übertragung nicht über eine (drahtlose) Funkverbindung erfolgt, etwa per Bluetooth-Verbindung oder dergleichen. Hingegen sind drahtlose induktive Datenübertragungen über Spulen und dergleichen durchaus mit umfasst. Ebenso sind besagte optische und/oder akustische Datenübertragungen (z.B. Lichtpulse, Ultraschall, Tonsignale nach V.23 oder DTMF) mit umfasst. Die Kombination "stromlos und funkfrei" schließt demnach lediglich solche Übertragungsformen aus, bei denen elektrische Signale oder Funksignale im engeren Sinne übertragen werden.

Die Erfindung schlägt auch eine Anordnung zur Durchführung des Verfahrens vor, um eine solche stromlose und funkfreie Datenübertragung auszuführen.

Weitere vorteilhafte Ausgestaltungen ergeben sich aus den Unteransprüchen.

Nachfolgend wird die Erfindung anhand von Ausführungsbeispielen und unter Bezugnahme auf die beiliegenden weiteren Zeichnungen näher beschrieben:
- Die Figur 2: zeigt in einer schematischen Darstellung eine erfindungsgemäße Anordnung nach einem ersten Ausführungsbeispiel.
- Die Figur 3: zeigt in einer schematischen Darstellung eine Anordnung nach einem zweiten Ausführungsbeispiel.
- Die Figuren 4a und 4b: zeigen die in der Anordnung eingesetzten Aufnahme- und Ausgabevorrichtungen im näheren Detail.
- Die Figur 5: zeigt ein schematisches Ablaufdiagramm für ein erfindungsgemäßes Verfahren.

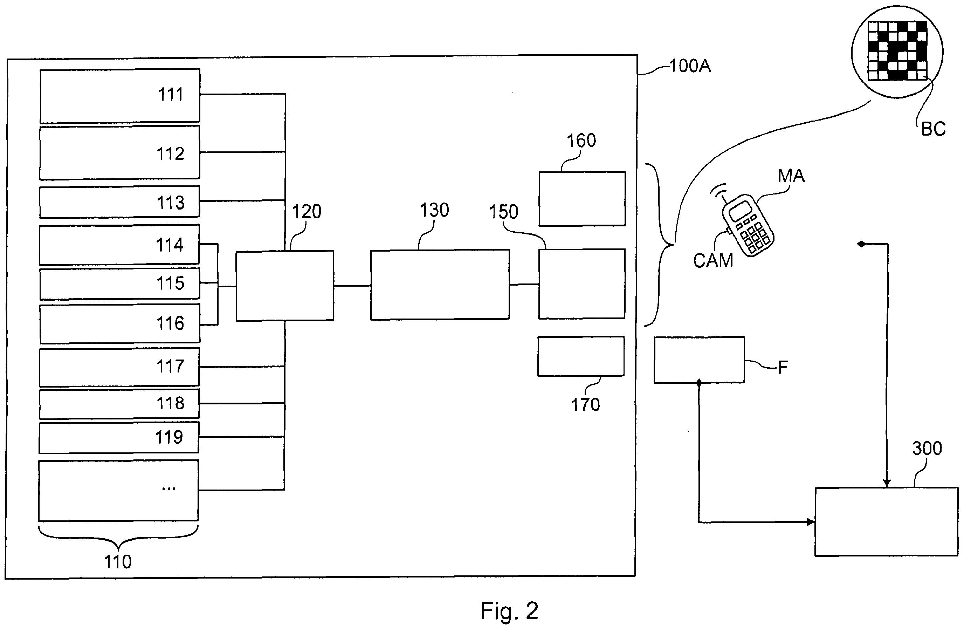

In der Figur 2 ist als erstes Ausführungsbeispiel eine Anordnung dargestellt, die ein Selbstbedienungsterminal 100A in Gestalt eines Geldautomaten umfasst. Es sind mehrere Ausgabevorrichtungen, hier in Form von Monitoren 150 bzw. 160 sowie Druckern, vorgesehen. Die Ausgabevorrichtungen sind beschaffen, die auszugebenden Daten, insbesondere Zustanddaten bzw. Servicedaten, welche zunächst als elektronische Datensignale vorliegen, in eine Datenform zu wandeln, die weder strombehaftet noch funkwellenbehaftet ist. Zum stromlosen und funkfreien Empfang der Daten sind mehrere Aufnahmevorrichtungen, wie z.B. eine Kamera CAM oder ein Faxgerät F, vorgesehen. Die Aufnahmevorrichtungen sind beschaffen, die empfangenen Daten wieder in elektronische Datensignale zu wandeln, um diese dann über eine Daten- bzw.

Telekommunikationsverbindung an eine Datenzentrale 300 weiterzuleiten.

In dem hier gezeigten Beispiel werden die Daten in Form einer optischen Datenübertragung von dem Geldautomaten 100A an mindestens ein Gerät, welches durch den Servicetechniker bedient wird, übertragen. Das Gerät weist eine geeignete Aufnahmevorrichtung auf, hier z.B. eine Kamera CAM. Von dem Gerät, das ein Telekommunikationsgerät, insbesondere ein Mobiltelefon MA, sein kann, werden dann die Daten in elektronischer Form, vorzugsweise über eine Telekommunikationsverbindung an die Datenzentrale 300 übertragen.

Wie die Figur 2 veranschaulicht, kann die Datenübertragung beispielsweise in Form von Barcodes BC erfolgen, wobei das Selbstbedienungsterminal 100A mit geeigneten optischen Ausgabevorrichtungen bzw. Anzeigevorrichtungen ausgestattet ist, die hier als Monitore 150 oder 160 bzw. als Drucker ausgebildet sind. Werden beispielsweise die zu übertragenden Daten auf den Kundenmonitor 150 als Matrixcode BC (sog. 2D Matrix) oder als Barcode angezeigt, so kann mittels einer Kamera dieser Matrix- bzw. Barcode eingelesen werden. Im Weiteren werden diese Codes unter dem Begriff Barcode zusammengefasst.

Im gezeigten Beispiel wird dazu die Kamera CAM desjenigen Mobilfunktelefons MA genutzt, welches der Servicetechniker ohnehin mit sich führt. Sobald der oder die Barcodes von der Kamera CAM eingelesen sind, können die entsprechenden Daten über das Mobilfunkgerät MA an die Datenzentrale 300 über herkömmliche Telekommunikations- bzw. Mobilfunkverbindungen weiter übertragen werden. Somit ist ein direkter Datenaustausch zwischen dem Selbstbedienungsterminal 100A und der Datenzentrale 300 gegeben.

Die Datenübertragung kann auch in umgekehrter Richtung erfolgen, indem beispielsweise das Mobilfunkgerät MA die von der Datenzentrale 300 kommenden Daten als Barcode oder in anderer optischer Weise auf dem Bildschirm des Mobilgerätes MA darstellt, wobei dann an dem Selbstbedienungsterminal eine Kamera vorgesehen ist, die wiederum diesen Barcode einliest und die daraus gewonnenen Daten somit empfängt. Als Kamera könnte eine ohnehin verwendete Überwachungskamera dienen.

Alternativ zu einer Anzeige der Barcodes BC auf dem Kundenmonitor 150 oder auf dem Bedienmonitor 160 kann auch vorgesehen sein, dass der oder die Barcodes BC über den Drucker 170 des Bedienungsterminals 100A ausgegeben werden. In diesem Falle entnimmt der Servicetechniker das von dem Drucker ausgegebene Papier mit den drauf ausgedruckten Barcodes und legt das bedruckte Papier in das Faxgerät F ein. Dort werden die Barcodes eingelesen und als elektronische Daten über das Telekommunikationsnetz an die Datenzentrale 300 weitergeleitet. Somit ist auch eine bidirektionale Datenübertragung möglich.

In den meisten Anwendungsfällen reicht jedoch eine unidirektionale Datenübertragung aus, mit der Servicedaten ausgehend von dem Selbstbedienungsterminal 100 an die Datenzentrale 300 übertragen werden. Die Datenübertragung selbst kann ohne Zutun des Servicetechnikers erfolgen. Er muss nur dafür sorgen, dass eine Telekommunikationsverbindung zur Datenzentrale aufgebaut wird.

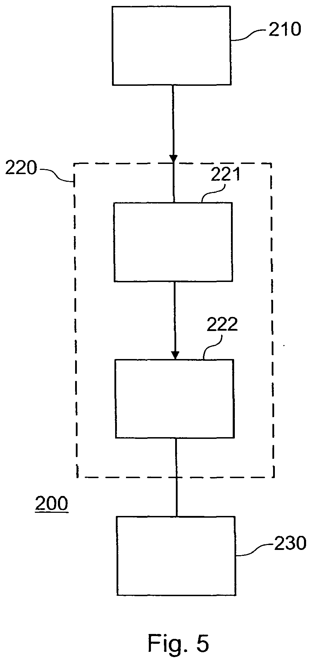

Nachfolgend wird nun das zur Datenübertragung vorgeschlagene Verfahren beispielhaft beschrieben, wobei auch auf die Figur 5 Bezug genommen wird, die dazu eine schematische Darstellung in Form eines Ablaufdiagramms enthält:

Das Verfahren 200 beginnt mit einem Schritt 210, bei dem Servicedaten von dem SB-Terminal bzw. Geldautomaten 100A angefordert werden. Das geschieht z.B. dadurch, dass der Servicetechniker einen bestimmten Bedienknopf am Geldautomaten betätigt oder eine bestimmte Kodierung über die Tastatur eingibt. Daraufhin wird in dem Geldautomaten 100A eine Bereitstellung der angeforderten Daten und deren optische Anzeige sowie stromlose und funkfreie Nahfeldübertragung veranlasst (siehe Schrittfolge 220). Dazu fragt ein Wartungs-Diagnosedaten-Generator 120 (siehe auch Figur 2) die Zustände von verschiedenen Modulen bzw. Einheiten 110 innerhalb des Geldautomaten 100A ab. Dann generiert der Wartungs-Diagnosedaten-Generator 120 daraus die gewünschten Daten betreffend der Zustände der verschiedenen Komponenten bzw. Baugruppen 110. Der Generator 120 stellt alle zu übertragenen Daten bzw. Informationen konsolidiert bereit. Auf eine Anforderung des Bedieners bzw. Technikers vor Ort (z.B. Eingabe eines Kommandos, Bedienung einer Taste bzw. Tastenkombination) werden die Informationen dann als Barcode BC dargestellt. Dazu werden innerhalb einer nachgeschalteten Transformationseinheit 130 die Daten in eine Barcode-Darstellungsform überführt. Die Schritte 120 und 130 können Software-technisch so realisiert werden, dass die Diagnose-und Serviceplattform auf einer Treiberschicht aufsetzt (Schritt 120); darauf wiederum setzt eine sog. T-SOP auf (Technisches Service und Operationsprogramm) auf (Schritt 130), welches auch die Mensch-Maschine-Schnittestelle zur Diagnose-und Serviceplattform bildet. Die erzeugte Barcode-Darstellungsform wiederum kommt dann beispielsweise auf dem Kundenmonitor 150 zur Anzeige. Der Verfahrensschritt zur optischen Anzeige der Daten in Form eines Barcodes ist in Figur 5 als Schritt 221 dargestellt.

In einem nachfolgenden Schritt 222 kann nun das von dem Servicetechniker mitgeführte und mit Kamera CAM ausgestattete Gerät MA die Barcodes BC und somit die Daten optisch einlesen. Vorzugsweise wird hierzu wird das Mobilfunkgerät MA des Servicetechnikers eingesetzt.

Anschließend kann in einem weiteren Schritt 230 eine Datenübertragung im herkömmlichen Sinne über ein Telekommunikationsnetz an die Datenzentrale 300 erfolgen. Dazu wird in dem Mobilfunkgerät MA eine Datenwandlung der von der Kamera CAM eingelesenen Daten durchgeführt und eine Datenfunk-Übertragung, zum Beispiel nach dem GSM-Standard, durchgeführt.

Wie anhand der Figur 2 und der Figur 5 beschrieben wurde, wird das SB-Terminal weder elektrisch noch funktechnisch an externe Geräte oder Netze angeschlossen, sondern es erfolgt im Nahbereich eine sichere und abhörfreie Datenübertragung, die hier beispielsweise als optische Datenübertragung ausgebildet ist.

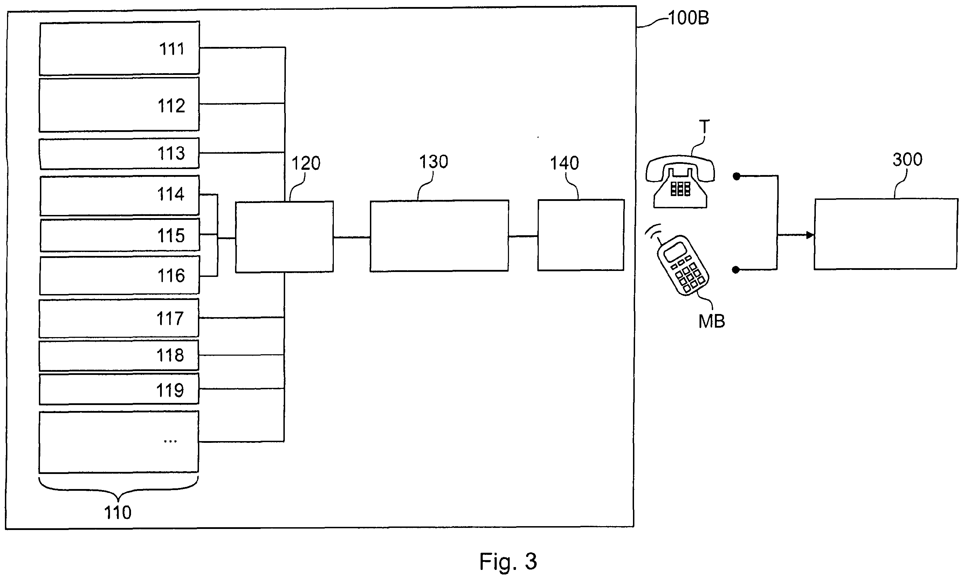

Die Figur 3 zeigt ein weiteres Ausführungsbeispiel, bei dem die Datenübertragung in Form von akustischen Signalen erfolgt. Dazu ist ein SB-Terminal bzw. ein Geldautomat 100B vorgesehen, der mit einem Akustikkoppler 140 ausgestattet ist, welcher wiederum geeignet ist, akustische Signale auszugeben und in einen herkömmlichen Telefonapparat T bzw. ein Mobiltelefon MB einzukoppeln. Von dort aus werden dann die Daten wieder in elektrische Signale gewandelt und über herkömmliche Telekommunikationsnetze an die Datenzentrale 300 übertragen.

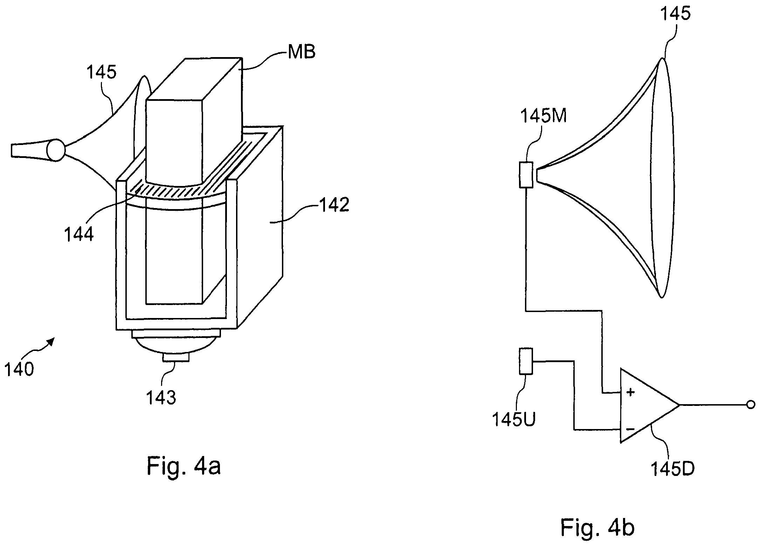

Die Figuren 4a und 4b zeigen im Detail den Aufbau eines solchen Akustikkopplers 140. Wie die Figur 4a zeigt, ist der Akustikkoppler 140 für die Aufnahme eines Mobiltelefons MB ausgestaltet. Dazu weist der Akustikkoppler eine Halterung 142 auf, die für eine akustische Abschirmung und somit für eine störungsfreie Übertragung von Tönen beschaffen ist. Der Akustikkoppler weist insbesondere einen Lautsprecher 143 auf, der entsprechende Tonsignale aussendet, welche dann wiederum von dem Mikrofon des Mobiltelefons MB empfangen werden. Alternativ können die Töne nach dem V.23-Modulationsverfahren oder bei geringeren Datenübertragungsraten auch nach dem DTMF-Prinzip moduliert sein und übertragen werden.

Für eine unidirektionale Übertragung von dem Geldautomaten 100B zur Datenzentrale 300 (siehe auch Fig. 3) würde bereits ein Lautsprecher 143 ausreichen. Für eine bidirektionale Verbindung ist hier zusätzlich noch ein Mikrofontrichter 145 mit einem entsprechenden Mikrofon 145M vorgesehen. Wie die Figur 4B im näheren Detail zeigt, ist das Mikrofon 145M mit einem Trichter 145 ausgestattet, der an dem Lautsprecher des Mobiltelefons MB angelegt wird und somit von dem Mobiltelefon abgegebene akustische Signale empfangen kann. Diese Signale könnten dann als elektrische Signale direkt in eine Datenverarbeitung des Geldautomaten 100B eingespeist werden. Um jedoch zu vermeiden, dass auch Umgebungsgeräusche die empfangenen Akustiksignale stören, ist noch ein Umgebungsmikrofon 145U vorgesehen. Mittels eines Differenzverstärkers 145D werden nun beide Mikrofonsignale zusammengeführt, wobei das Signal des Umgebungsmikrofons 145U von dem Signal des eigentlichen Mikrofons 145M abgezogen werden. Dadurch ergibt sich ein bereinigtes Signal, das eine bessere und störungsfreiere Datenauswertung ermöglicht.

Der hier aufgezeigte Akustikkoppler 140 kann beispielsweise direkt in das SB-Terminal 100B integriert sein. Er kann aber auch als zusätzliches Gerät an oder in der Nähe des SB-Terminals 100B montiert sein. Wie insbesondere anhand der Figur 4A gezeigt wird, ist der Akustikkoppler köcherförmig ausgestaltet und somit in der Lage, sich möglichst vielen Designformen von Mobiltelefonen anzupassen. Die Trichterform 145 ist so ausgelegt, dass sie möglichst viele verschiedene Mobiltelefon-Designs und Positionen von Lautsprechern abdeckt. Eine Gummilippe 144 dichtet gegenüber dem Gehäuse des Mobiltelefons sicher ab. Dadurch, dass der Akustikkoppler bzw. der Köcher nur die untere Hälfte des Telefons abdeckt, ist auch eine Entkopplung zwischen Mikrofonteil und Lautsprecherteil des Mobiltelefons MB gewährleistet. Zusätzlich können noch elektromagnetische Abschirmungsmaßnahmen vorgesehen sein, die verhindern, dass die von dem Mobiltelefon ausgehende Funkstrahlung die Mikrofone 145M und 145U bzw. die nachgeschaltete Elektronik beeinträchtigen.

Die hier vorgeschlagene stromlose und funkfreie Datenübertragung ist in der Lage, ausreichend große Übertragungsraten bereitzustellen. Es hat sich gezeigt, dass es für Wartungszwecke oftmals ausreicht, eine Datenübertragung von einigen kbit/s bereitzustellen. Die Übertragung eines Akustikkopplers hat den besonderen Vorteil, dass auch einfache und ältere Telekommunikationsgeräte sowie einfachste Telefonapparate angeschlossen werden können.

Die hier ebenfalls beschriebene optische Datenübertragung hat insbesondere den Vorteil, dass die Datenübertragung über ohnehin vorhandene Anzeigegeräte, wie beispielsweise Monitor oder Drucker sowie über Faxgeräte durchgeführt werden kann. Neben den explizit beschriebenen optischen bzw. akustischen Datenübertragungen ist es auch denkbar, andere Formen der stromlosen und funkfreien Datenübertragung umzusetzen. Beispielsweise könnte auch eine induktive Datenübertragung mittels elektro-magnetischer Spulen realisiert werden.

Die Erfindung ist besonders zum Einsatz bei Selbstbedienungsterminals geeignet, die nicht direkt mit fremden Geräten oder fremden Netzanschlüssen versehen werden sollen, wie dies beispielsweise bei Geldautomaten der Fall ist. Der Einsatzbereich der Erfindung ist jedoch nicht hierauf allein beschränkt, sondern kann für jede Form von Selbstbedienungsterminals eingesetzt werden.

### Bezugszeichenliste

- 100A, 100B: Selbstbedienungsterminal in Gestalt eines Geldautomaten
- 110: Module des Geldautomaten, wie z.B.:
- 111-119: Banknotenein- und/oder Ausgabemodul usw.
- 120: Datengenerator-Einheit (generiert Wartungs- und/oder Diagnosedaten)
- 130: Datentransformations-Einheit (wandelt Daten in vorgebbare Datenübertragungsform um)
- 140-170: Ausgabevorrichtungen in Gestalt von:
140 Akustikkoppler
150 Kundenmonitor
160 Operatormonitor Aufnahmevorrichtungen in Gestalt von Telekommunikationsendgeräten, wie z.B.:
MA Mobiltelefon mit Kamera CAM
MB Mobiltelefon (ohne Kamera)
F Telefaxgerät
T Telefonapparat
BC Datenübertragungsform, hier als Barcode
300 Datenzentrale
141-145 Bauelemente des Akustikkopplers 140

## Patentansprüche

1. Verfahren (200) zur Übertragung von Daten für die Wartung eines Selbstbedienungsterminals (100),
bei dem Daten, die den technischen Zustand des Selbstbedienungsterminals betreffen, zwischen dem Selbstbedienungsterminal (100) und einer entfernten Datenzentrale (300) über eine Telekommunikationsverbindung übertragen werden,
wobei die Daten im Nahbereich des Selbstbedienungsterminals (100) über Ausgabe- und Aufnahmevorrichtungen in einer stromlosen und funkfreien Datenübertragungsform übertragen werden,
**dadurch gekennzeichnet,**
**dass** die Daten in einer auf Barcodes basierenden optischen Datenübertragungsform übertragen werden, wobei:
in einem ersten Schritt (210) die Daten an dem Selbstbedienungsterminal angefordert werden;
in einem nächsten Schritt (221) die Daten aus elektrischen Datensignalen gewandelt und von einer Ausgabevorrichtung (150, 160) in einer optischen Darstellungsform (BC) ausgegeben werden;
in einem nächsten Schritt (222) die Daten von einer Aufnahmevorrichtung (CAM) in der optischen Darstellungsform aufgenommen und in elektrische Datensignale gewandelt werden; und
in einem nächsten Schritt (230) als elektrische Datensignale über die Telekommunikationsverbindung an die entfernte Datenzentrale (300) übertragen werden.

2. Anordnung zur Übertragung von Daten für die Wartung eines Selbstbedienungsterminals (100), wobei die Anordnung beschaffen ist, Daten, die den technischen Zustand des Selbstbedienungsterminals betreffen, zwischen dem Selbstbedienungsterminal (100) und einer entfernten Datenzentrale (300) über eine Telekommunikationsverbindung zu übertragen,
wobei die Anordnung Ausgabe- und Aufnahmevorrichtungen umfasst, um im Nahbereich des Selbstbedienungsterminals (100) die Daten in einer stromlosen und funkfreien Datenübertragungsform zu übertragen,
**dadurch gekennzeichnet,**
**dass** die Ausgabe- und Aufnahmevorrichtungen beschaffen sind, die Daten in einer auf Barcodes basierenden optischen Datenübertragungsform zu übertragen, wobei auf eine Anforderung der Daten an dem Selbstbedienungsterminal die Daten aus elektrischen Datensignalen gewandelt und von einer Ausgabevorrichtung (150, 160) in einer optischen Darstellungsform (BC) ausgegeben werden, wobei eine Aufnahmevorrichtung (CAM; MA) beschaffen ist, die Daten in der optischen Darstellungsform anzunehmen und in elektrische Datensignale zu wandeln und über die Telekommunikationsverbindung an die entfernte Datenzentrale (300) zu übertragen.

3. Anordnung nach Anspruch 2, **dadurch gekennzeichnet, dass** die Ausgabe- und Aufnahmevorrichtungen elektro-optische Wandler umfassen.

4. Anordnung nach Anspruch 2 oder 3, **dadurch gekennzeichnet, dass** die Anordnung mindestens eine Ausgabevorrichtung in Gestalt mindestens eines Monitors (150, 160) und/oder eines Druckers (170) umfasst.

5. Anordnung nach einem der Ansprüche 3 bis 4, **dadurch gekennzeichnet, dass** die Anordnung mindestens eine Aufnahmevorrichtung in Gestalt mindestens eines Telekommunikationsendgerätes, insbesondere eines Telefons (T), eines Mobiltelefons (MA) und/oder eines Telefaxgerätes (F), umfasst.

6. Anordnung nach Anspruch 5, **dadurch gekennzeichnet, dass** das Mobiltelefons (MA) eine Kamera (CAM) aufweist.

7. Anordnung nach Anspruch 2 bis 6, **dadurch gekennzeichnet, dass** die Anordnung mindestens eine Aufnahmevorrichtung in Gestalt mindestens einer Kamera umfasst.

8. Anordnung nach Anspruch 7, **dadurch gekennzeichnet, dass** das Selbstbedienungsterminals (100) die Aufnahmevorrichtung in Gestalt mindestens einer Kamera umfasst.

## Claims

1. A method (200) for transferring data for the maintenance of a self-service terminal (100),
wherein data that pertains to the technical status of the self-service terminal is transferred between the self-service terminal (100) and a remote data centre (300) via a telecommunication-link, wherein data in a close-range of the self-service terminal (100) are transferred via output and receptor devices in a current-free / power-free and radio-free data-transfer-format,
**characterized in that**
the data is transferred in a data-transfer-form based upon barcodes, wherein
in a first step (210) the data is requested at the self-service terminal;
in a following step (221) the data is converted from electric data-signals and is output by a output device (150,160) in an optical displaying format (BC);
in a further step (222) the data is receptor by an receptor device (CAM) in an optical displaying format and are converted into electric data-signals; and
in a further step (230) is transferred as electric data-signals via the telecommunication-link to a remote data centre (300).

2. An arrangement for transferring data for the maintenance of a self-service terminal (100), wherein the arrangement is provided to transfer data that pertains to the technical status of the self-service terminal between the self-service terminal (100) and a remote data centre (300) via a telecommunication-link,
wherein the arrangement comprises output and receptor devices to transfer data in a close-range of the self-service terminal (100) in a current-free / power-free and radio-free data-transfer-format,
**characterized in that,**
the output and receptor devices are arranged to transfer data in a optical data-transfer-format that is based upon barcodes,
wherein on demanding the data at a self-service terminal said data is converted from electric data-signals and is output by a output device (150,160) in an optical displaying format (BC), wherein an receptor device (CAM) is arranged to accept the data into an optical displaying format and to convert them into electric data-signals and to transfer to a remote data centre (300) via the telecommunication-link.

3. The arrangement according to claim 2, **characterized in that** the output and receptor devices comprise electro-optical transducers.

4. The arrangement according to claim 2 or 3, **characterized in that** the arrangement comprises at least one output device in form of a monitor (150, 160) and / or a printer.

5. The arrangement according to one of the claims 3 to 4, **characterized in that** the arrangement comprises at least one receptor device in form of at least one telecommunication-device, in particular a telephone (T), a mobile phone (MA) and / or a fax (F).

6. The arrangement according to claim 5, **characterized in that** the mobile phone (MA) comprises a Camera (CAM).

7. The arrangement according to one of the claims 2 to 6, **characterized in that** the arrangement comprises at least one receptor device in form of at least one Camera.

8. The arrangement according to claim 7, **characterized in that** the self-service terminal (100) comprises the receptor device in form of at least one camera.

## Revendications

1. Un procédé (200) de transmission de données pour la maintenance d'un terminal en libre-service (100),
dans lequel les données relatives à l'état technique du terminal en libre-service sont transférées entre le terminal en libre-service (100) et un centre de données distant (300) au moyen d'une liaison de télécommunications, dans lequel les données à proximité du terminal en libre service (100) sont transférées via des dispositifs de sortie et récepteurs dans un format de transmission de données sans radio, sans électricité et sans courant,
**caractérisé en ce que**
les données sont transférées dans un format de transmission de données basé sur des codes barres, dans lequel,
dans une première étape (210), les données sont demandées au niveau du terminal en libre service ;
dans une étape qui suit (221), les données sont converties depuis la forme de signaux de données électriques et sont générées en sortie au moyen d'un dispositif de sortie (150, 160) dans un format d'affichage optique (BC) ;
dans une étape encore ultérieure (222) les données sont réceptionnées au moyen d'un dispositif de réception (CAM) dans un format d'affichage optique, et sont converties en signaux de données électriques ; et
dans une étape encore ultérieure (230), les signaux de données électriques sont transmis en signaux de données numériques à un centre de données distant (300) au moyen de la liaison de télécommunication.

2. Un dispositif de transfert de données pour la maintenance d'un terminal en libre service (100), dans lequel le dispositif est fourni pour transférer, entre le terminal en libre-service (100) et un centre de données distant (300), des données relatives à l'état technique du terminal en libre-service (100) au moyen d'une liaison de télécommunications, dans lequel le dispositif comporte des dispositifs de sortie et récepteurs pour transférer des données dans un format de transmission de données sans radio, sans électricité et sans courant,
**caractérisé en ce que**
les dispositifs de sortie et les récepteurs sont disposés pour transférer les données dans un format de transmission de données basé sur des codes barres, dans lequel,
dans lequel lors de la demande de données au niveau du terminal en libre service, lesdites données sont converties depuis la forme de signaux de données électriques et sont générés en sorties par un dispositif de sortie (150, 160) dans un format d'affichage optique (BC), dans lequel le dispositif de réception (CAM) est adapté pour accepter les données sous une forme d'affichage optique et de les convertir en signaux de données électriques pour la transmission à un centre de données distant (300) via la liaison de télécommunications.

3. Le dispositif selon la revendication 2, **caractérisé en ce que** les dispositifs de sortie et de réception comportent des transducteurs électro-optiques.

4. Le dispositif selon la revendication 2 ou 3, **caractérisé en ce que** le dispositif comporte au moins un dispositif de sortie sous la forme d'un moniteur (150, 160) et/ou d'une imprimante.

5. Le dispositif selon l'une quelconque des revendications 3 à 4, **caractérisé en ce que** le dispositif comporte au moins un récepteur sous la forme d'un dispositif de télécommunication au moins, en particulier un téléphone (T), un téléphone mobile (MA) et/ou un fax (F).

6. Le dispositif selon la revendication 5, **caractérisé en ce que** le téléphone mobile (MA) comporte un appareil photographique.

7. Le dispositif selon l'une quelconque des revendications 2 à 4, caractérisé en ce le dispositif comporte au moins un récepteur sous la forme d'un ou plusieurs appareils photos.

8. Le dispositif selon la revendication 7, **caractérisé en ce que** le terminal en libre service (100) comporte le récepteur sous la forme d'un ou plusieurs appareil(s) photos.
